# EUROPÄISCHE PATENTSCHRIFT

(11) **EP 2 880 308 B1**
(45) Veröffentlichungstag und Bekanntmachung des Hinweises auf die Patenterteilung: **20.04.2022**
(21) Anmeldenummer: 13745423.7
(22) Anmeldetag: 06.08.2013
(51) Int. Cl.: F03D 80/30, H01T 4/02, F03D 80/40

(54) **CFK WIDERSTANDSBLATTHEIZUNG**
CRP RESISTANCE BLADE HEATING
CHAUFFAGE DE PALE PAR RÉSISTANCE PRFC

(30) Priorität: 06.08.2012 DE 102012015540; 31.05.2013 DE 102013210205
(43) Veröffentlichungstag der Anmeldung: 10.06.2015
(73) Patentinhaber: Wobben Properties GmbH, 26607 Aurich (DE)
(72) Erfinder: CLEMENS, Christian, 10367 Berlin (DE)
(74) Vertreter: Eisenführ Speiser
(86) Internationale Anmeldenummer: PCT/EP2013/066487
(87) Internationale Veröffentlichungsnummer: WO 2014/023734

(56) Entgegenhaltungen:
- EP-A1- 0 842 360
- EP-A1- 1 187 988
- WO-A1-2011/096851
- WO-A1-2011/127996
- FR-A- 853 799
- US-A- 2 552 075
- US-A- 4 386 749
- US-A1- 2006 043 240
- US-A1- 2007 115 163

## Beschreibung

Die Erfindung betrifft ein beheizbares Rotorblatt einer Windenergieanlage. Weiterhin betrifft die Erfindung ein Verfahren zum Beheizen eines Rotorblattes einer Windenergieanlage und die Erfindung betrifft eine Windenergieanlage. Außerdem betrifft die vorliegende Erfindung einen in einem Rotorblatt auszubildenden Überspannungsableiter und die Erfindung betrifft eine Heizvorrichtung zum Beheizen eines Rotorblattes. Außerdem betrifft die Erfindung ein Verfahren zum Auslegen einer Heizvorrichtung.

An den Rotorblättern von Windenergieanlagen kann es bei Temperaturen unter 0°C oder knapp darüber zu Vereisungen kommen. Diesem Problem wird nach dem Stand der Technik begegnet durch Rotorblattheizungen. Ein Verfahren zum Enteisen eines Rotorblattes einer Windenergieanlage ist bekannt aus EP 0842360. Diesem Verfahren liegt die Aufgabe zugrunde, ein in konstruktiver Hinsicht möglichst einfaches und damit kostengünstiges, dabei jedoch effektives Verfahren zur Vermeidung der sich aus Vereisungen der Rotorblätter ergebenden Nachteile zu finden. Diese Aufgabe wird gemäß dem genannten Dokument so gelöst, dass ein erwärmtes Wärmeträgermedium nach Durchströmen eines blattnasenseitigen Hohlraumes mit entsprechender Wärmeabgabe an Bereiche der Blattwand in einen blatthinterkantenseitigen Hohlraum gelenkt und daraus abgeleitet wird. Nach Einleitung der Warmluft an der Blattwurzel kühlt sich diese entlang der Blattlängsachse (Blattradius) ab. Dies hat den Nachteil, dass die Abtauwirkung am Ort des stärksten Eisansatzes, nämlich der Blattspitze bereits stark reduziert ist.

Die europäische Patentanmeldung EP 1 187 988 A1 offenbart ein Rotorblatt einer Windenergieanlage, wobei das Rotorblatt eine Heizvorrichtung umfasst, die elektrisch leitfähige Heizplatten aufweist.

Die US-Veröffentlichung 4,386,749 A offenbart eine Heizvorrichtung eines Flugzeugpropellers, wobei die Heizvorrichtung leitfähige Heizstränge umfasst, die mäanderförmig ausgebildet sind.

Die US-amerikanische Offenlegungsschrift US 2006/0043240 A1 betrifft ein Heizfolienelement für eine elektrothermische Enteisung von Flugzeugoberflächen. Dazu werden Folien mit Mustern vorgeschlagen, die viele Löcher aufweisen, nämlich gemäß einem vorgegebenen Muster. Als zugrundeliegender Stand der Technik wird dort zudem eine Stromheizung beschrieben, die einen einzigen Metallkanal aufweist.

Die US-amerikanische Offenlegungsschrift US 2007/0115163 A1 betrifft eine Radarver-änderungsstruktur. Dabei beschreibt dieses Dokument für elektrothermische Heizelemente, insbesondere elektrothermische Enteisungsvorrichtungen, Strukturen, die einen für Radar sichtbaren Querschnitt verringern.

Der Erfindung liegt somit die Aufgabe zugrunde, zumindest eines der o.g. Probleme zu adressieren. Insbesondere soll eine Lösung vorgeschlagen werden, die möglichst gezielt Heizleistung bereitstellen kann, die an die jeweilige Position entlang des Rotorblattes angepasst ist. Zumindest soll eine alternative Lösung vorgeschlagen werden.

Erfindungsgemäß wird ein Rotorblatt gemäß Anspruch 1 vorgeschlagen. Demnach ist eine Heizvorrichtung vorgesehen, die im Bereich der Rotorblattoberfläche angeordnet ist, um das Rotorblatt zu beheizen. Die Anordnung im Bereich der Rotorblattoberfläche bedeutet insbesondere, dass diese Heizvorrichtung in einer bzw. der Außenschale des Rotorblattes angeordnet ist. Die Heizvorrichtung kann hierfür in diese Außenschale eingearbeitet sein, insbesondere im Falle einer Außenschale aus faserverstärktem Kunststoff kann sie in dieses Material einlaminiert sein. Außerdem kann sie auch unmittelbar innen an der Außenschale befestigt sein, wie bspw. flächig angeklebt sein.

Die Heizvorrichtung weist Heizstränge auf und die Heizstränge sind sinusförmig, wellenförmig und/oder zickzackförmig ausgebildet. Ihre Ausbildung lässt sich sprachlich anhand eines sinusförmigen Verlaufs gut erläutern, was nachfolgend teilweise gemacht wird. Die dabei beschriebenen und ausgenutzten Effekte sind aber nicht auf eine Sinusform im streng mathematischen Sinne beschränkt. Es kommt darauf an, dass die Heizstränge nicht unmittelbar gerade bzw. gestreckt verlaufen, sondern durch ihre sinusförmige, wellenförmige oder zickzackförmige Ausgestaltung von einer solchen linienförmigen, insbesondere geradlinigen Ausgestaltungen abweichen. Durch diese Ausgestaltung wird jeder Heizstrang somit auch in einem Streifen und damit in einer Fläche, statt nur entlang einer Linie, ausgebildet. Dieser Streifen bzw. diese Fläche ist dabei parallel zur Rotorblattoberfläche in dem jeweiligen Bereich angeordnet. Bezogen auf die Sinusform bedeutet das, dass diese parallel zur Blattoberfläche schwingt.

Eine Sinusfunktion weist eine Amplitude und eine Periodenlänge auf. Diese Werte charakterisieren, neben einer Phasenlage auf die es hier weniger ankommt, einen Sinusverlauf. In ähnlicher Weise charakterisiert eine Amplitude die Wellenhöhe im Fallen des wellenförmigen Verlaufs und eine Amplitude charakterisiert die Zackenhöhe im Falle eines zickzackförmigen Verlaufs. Die Periodenlänge beschreibt den Abstand von einem Spitzenwert zum Nächsten, oder von einem Nulldurchgang der Kurve zum übernächsten Nulldurchgang. In diesem Sinne beschreibt die Wellenlänge auch den Abstand zweier Wellenberge im Falle der wellenförmigen Ausgestaltung bzw. den Abstand zweier benachbarter Zacken im Falle der zackenförmigen Ausgestaltung. Hierfür wird für den sinusförmigen Verlauf, den wellenförmigen Verlauf und auch den zickzackförmigen Verlauf zusammenfassend und vereinheitlichend vorliegend von Wellenlänge gesprochen.

Es wird nun vorgeschlagen, dass die Amplitude und/oder die Wellenlänge entlang der Heizstränge variiert, um dadurch abschnittsweise eine spezifische Flächenheizleistung der Heizvorrichtung zu variieren.

Hier liegt insbesondere der Gedanke zugrunde, dass durch Variation der Amplitude und/oder der Wellenlänge bei unverändertem Abstand zwischen Anfangspunkt und Endpunkt des jeweiligen Heizstrangs, dennoch die zum Heizen wirksame Länge des Heizstrang s erhöht und damit die Heizleistung dieser Strecke zwischen besagtem Anfangs- und Endpunkt erhöht wird.

Die Heizstränge sind elektrische leitfähig und werden zum Beheizen mit einem entsprechend elektrischen Heizstrom beaufschlagt. Dieser Heizstrom ist, gemäß dem Kirchhoffschen Knotensatz, entlang jedes Heizstrangs gleich groß und führt daher in jedem gleich langen Strangabschnitt des Heizstrangs zu derselben Heizleistung. Durch eine Verringerung der Wellenlänge können mehr gleich lange Abschnitte eines Heizstrangs auf derselben Fläche untergebracht werden, wodurch sich die Heizleistung dieser Fläche erhöht. Es erhöht sich also die spezifische Flächenheizleistung hierdurch. Eine solche Erhöhung ist grundsätzlich auch durch eine Erhöhung der Amplitude erzielbar, wobei dies für die Betrachtung eines einzelnen Heizstrangs zunächst zu einem breiteren Bereich führen würde, in dem dieser Heizstrang verläuft. Bei der Verwendung vieler parallel verlaufender und im Grunde in Phase schwingender Heizstränge kann eine Erhöhung der Amplitude mit nur geringer Verbreiterung des Heizstreifens erreicht werden, in dem diese Heizstränge angeordnet sind.

Vorzugsweise verlaufen die Amplitude und die Wellenlänge jeweils parallel zur Rotorblattoberfläche. Die Heizstränge bilden somit eine flächige Anordnung und diese flächige Anordnung ist parallel zur Rotorblattoberfläche und in ihrer Nähe angeordnet und kann dort gezielt die Rotorblattoberfläche beheizen. Es ist zu beachten, dass die Beheizung dem Ziele dient, eine Vereisung zu verhindern oder zu lösen. Insoweit wird die Heizleistung an der Rotorblattoberfläche benötigt.

Vorzugsweise verlaufen die Heizstränge in Längsrichtung des Rotorblattes. Dadurch können zunächst die Heizstränge in Richtung der Blattwurzel zur Rotorblattspitze verlegt werden und entsprechend lange Bereiche des Rotorblatts überspannen. Durch die Ausrichtung in Rotorblattlängsachse kann dabei durch Variation insbesondere der Wellenlänge eine Variation der spezifischen Flächenheizleistung in Längsrichtung des Rotorblattes erreicht werden. Somit kann durch die vorgeschlagene Variation der spezifischen Flächenheizleistung in Rotorblattlängsrichtung dem Umstand Rechnung getragen werden, dass eine Vereisung besonders stark im Bereich der Rotorblattspitze zu erwarten ist. Hieran kann nun auf einfache Art und Weise die spezifische Heizleistung örtlich, also bezogen auf die Position entlang des Rotorblattes, angepasst werden.

Vorzugsweise wird auch vorgeschlagen, dass die Heizstränge zur Rotorblattspitze hin eine konstante Wellenlänge und/oder eine kleiner Amplitude aufweisen.

Die spezifische Flächenheizleistung wird vorzugsweise über die Wahl des jeweiligen Abstandes benachbarter Heizstränge, die Wahl der Wellenlänge der Heizstränge und die Wahl der Amplitude der Heizstränge eingestellt.

Vorteilhaft ist auch, dass eine verringerte Amplitude durch eine Verringerung der Wellenlänge ausgeglichen werden kann. Macht bspw. ein geringeres Platzangebot eine Verringerung der Amplitude erforderlich, könnte dies zu einer Verringerung der spezifischen Flächenheizleistung führen, die wiederum durch eine Verringerung der Wellenlänge erhöht werden könnte, um somit einen Ausgleich zu schaffen.

Gemäß einer Ausführungsform wird vorgeschlagen, dass die Heizstränge als Kohlefasern und/oder als Kohlefaserrovings in das Rotorblatt eingearbeitet sind. Eine solche Ausgestaltung wird insbesondere vorgeschlagen, wenn das Rotorblatt, zumindest im Bereich ihrer Außenschale aus faserverstärktem Kunststoff, insbesondere kohlefaserverstärktem Kunststoff gefertigt ist. In diesem Fall sind die Kohlefasern oder Kohlefaserrovings an die Verwendung in einem solchen Material bzw. innerhalb einer solchen Struktur angepasst. Der Aufbau der Außenschale kann sich somit auf bekannten Materialen beschränken.

Es ist aber zu beachten, dass die Heizstränge praktisch keinen Beitrag zur Stabilisierung des Rotorblattes liefern können, weil sie nicht gerade verlegt sind. Damit ist die Stabilität und damit Auslegung der Stabilität des Rotorblattes von diesen Heizsträngen unabhängig. Das erleichtert die Auslegung.

Die Heizstränge aus Kohlefasern oder Kohlefaserrovings können somit auf einfache Art und Weise vorgesehen werden und sie bilden ein gut geeignetes Material als elektrischer Heizwiderstand, weil sie, vereinfacht ausgedrückt, eine elektrische Leitfähigkeit besitzen, die aber vergleichsweise gering ist, jedenfalls im Vergleich zu üblichen metallischen Leitern.

Erfindungsgemäß wird vorgeschlagen, dass die Heizstränge in Heizgruppen aus mehreren parallel geschalteten Heizsträngen aufgeteilt sind und mehrere Heizgruppen zueinander in Reihe geschaltet sind. Demnach verlaufen mehrere, meist sehr viele Heizstränge in einer Heizgruppe parallel zueinander und sind auch elektrisch parallel geschaltet, indem sie an einem gemeinsamen Anfangsknoten und einem gemeinsamen Endknoten elektrisch zusammengeschaltet sind. Die Heizstränge einer Heizgruppe verlaufen vorzugsweise auch hinsichtlich ihrer Sinusform, Wellenform und/oder Zickzackform parallel zueinander, insbesondere etwa in Phase.

Mehrere solcher Heizgruppen werden elektrisch in Reihe geschaltet, insbesondere entlang der Rotorblattlängsrichtung auch in einer Reihe angeordnet. Durch diese Reihenschaltung fließt derselbe Strom durch jede Heizgruppe. Weist jede Heizgruppe auch jeweils gleich viele Heizstränge auf, die auch innerhalb einer Heizgruppe dieselben elektrischen Werte aufweisen, fließt auch in jedem Heizstrang derselbe Strom. Durch die Veränderung bzw. unterschiedliche Auswahl der Wellenlänge der Heizstränge für unterschiedliche Heizgruppen lässt sich eine unterschiedliche spezifische Flächenheizleistung jeder dieser Heizgruppen einstellen. Es kann aber gleichwohl auch oder alternativ hierdurch eine spezifische Flächenheizleistung innerhalb einer Heizgruppe variiert werden.

Überhaupt ermöglicht diese Variation der Amplitude und/oder Wellenlänge entlang der Rotorblattlängsachse eine kontinuierliche bzw. stufenlose Einstellung der jeweils gewünschten spezifischen Flächenheizleistung. Dies kann insoweit unabhängig einer bestimmten Verschaltung in Heizgruppen oder anderweitig erfolgen und wird allein durch die Variation der Wellenlänge und/oder der Amplitude ermöglicht.

Vorzugsweise ist die Heizvorrichtung insgesamt bzw. gruppenweise in Umfangsrichtung um das Rotorblatt, nämlich um die Rotorblattachse, herum angeordnet. Es wird also gemäß dieser Ausführungsform eine Unterteilung in Umfangsrichtung der Heizvorrichtung und/oder der Heizgruppen vermieden. Auch für diese Anordnung wird bevorzugt, dass die Heizvorrichtung in die Blattschale eingearbeitet ist, insbesondere einlaminiert ist.

Gemäß einer Ausführungsform können aber, um bspw. eine Strukturierung zu vereinfachen, einheitlich für unterschiedliche Heizgruppen unterschiedliche Amplituden und/oder unterschiedliche Wellenlängen vorgesehen sein. Wird einer bestimmten Heizgruppe eine bestimmte Wellenlänge und eine bestimmte Amplitude zugeordnet, kann dadurch der Heizgruppe die entsprechende spezifische Flächenheizleistung, bei vorgegebenem Heizstrom, zugeordnet werden.

Eine weitere Ausführungsform schlägt vor, dass das Rotorblatt ein elektrisches Blitzableitungssystem zum Ableiten eines Blitzes aufweist. Hierfür wird weiter vorgesehen, dass die Heizvorrichtung über Funkenstrecken oder andere Überspannungsschutzeinrichtung bzw. Überspannungsableiter mit dem Blitzableitungssystem so gekoppelt ist, dass eine galvanische Trennung vorliegt, solange kein Blitz in das Rotorblatt einschlägt und der Überspannungsleiter bzw. die Funkenstrecke von elektrischem Strom passiert bzw. übersprungen werden, wenn durch einen Blitzschlag in das Rotorblatt eine elektrische Spannung in der Heizvorrichtung induziert wird. Die Heizvorrichtung ist somit mit dem Blitzableitungssystem gekoppelt, aber im Normalbetrieb galvanisch getrennt. Diese Verbindung zum Blitzableitungssystem beeinflusst somit den Normalbetrieb der Heizvorrichtung nicht.

Ein solcher Überspannungsableiter kann bspw. als entsprechend dimensionierte Diode oder als Varistor ausgebildet sein bzw. solche Bauelemente beinhalten. Solche Bauelemente sind, teilweise stromrichtungsabhängig, erst ab einer bestimmten Spannung leitend und weisen davor einen sehr hohen elektrischen Widerstand auf, was hier auch als galvanisch nicht leitend bezeichnet wird. Der Überspannungsableiter leitet Überspannungen ab und ist insoweit ein Überspannungsschutz und der Begriff Überspannungsschutz wird in der vorliegenden Anmeldung synonym für Überspannungsableiter verwendet. Eine mögliche Ausführungsform des Überspannungsableiters ist eine Funkenstrecke, die insoweit repräsentativ für diverse, auch nicht aufgeführte, Überspannungsableiter beschrieben wird.

Schlägt nun ein Blitz in das Rotorblatt ein, kann aber ein Potentialausgleich über diese Funkenstrecken ggf. durchgeführt werden. Ein solcher Potentialausgleich wird besonders dann erforderlich, wenn ein Blitz in das Rotorblatt einschlägt, zu einem hohen Strom in dem Blitzableitungssystem führt und dadurch in der Heizvorrichtung, insbesondere in den Heizsträngen eine Spannung induziert. Diese Spannung sollte insbesondere zum Schutz der Heizvorrichtung abgeführt werden bzw. ausgeglichen werden, wozu die Funkenstrecken bzw. andere Überspannungsschutzeinrichtungen vorgesehen sind.

Gemäß einer Ausführungsform wird vorgeschlagen, dass am Anfang und am Ende der Heizvorrichtung und zwischen jeder Heizgruppe jeweils ein Überspannungsableiter, insbesondere eine Funkenstrecke zur Ankopplung der Heizvorrichtung an das Blitzableitungssystem angeordnet ist. Hierdurch wird eine hohe Spannung über die gesamte Strecke der Heizvorrichtung, die im Falle eines Blitzeinschlags induziert würde, vermieden werden, weil bereits Potentialausgleiche in den Zwischenbereichen, nämlich zwischen den Heizgruppen durch die Funkenstrecken erreicht werden. Die maximal hierbei anliegende Spannung ist für jede Heizgruppe auf die Spannung beschränkt, die auch in genau dieser Heizgruppe induziert werden würde, bevor die Spannung an einer Funkenstrecke überschlägt.

Vorzugsweise weist das Rotorblatt eine Blattwurzel und eine Blattspitze auf und die Heizvorrichtung ist in zwei in Reihe geschaltete Abschnitte aufgeteilt. Hiervon verläuft der erste Abschnitt von der Blattwurzel zur Blattspitze und der zweite zurück von der Blattspitze zur Blattwurzel. Diese beiden Abschnitte können nun auf einfache Weise im Bereich der Blattwurzel an eine Stromversorgung angeschlossen werden, um dort den Heizstrom zur Verfügung zu stellen. Der Heizstrom fließt somit, vereinfachend ausgedrückt, durch den ersten Abschnitt zur Blattspitze hin und durch den zweiten Abschnitt von der Blattspitze zurück. Alternativ kann auch eine Versorgungsleitung von der Blattwurzel bis zur Blattspitze geführt werden, wenn die Heizvorrichtung nicht in die beschriebenen oder ähnlichen Abschnitte aufgeteilt ist.

Erfindungsgemäß wird zudem eine Windenergieanlage vorgeschlagen, die einen Rotor mit wenigstens einem Rotorblatt aufweist. Üblicherweise sind aber drei Rotorblätter vorgesehen. Diese Windenergieanlage ist dadurch gekennzeichnet, dass ihre Rotorblätter eine Heizvorrichtung aufweisen und insbesondere so ausgebildet sind, wie oben gemäß wenigstens einer Ausführungsform beschrieben wurde. Somit kann die Windenergieanlage besonders gut auch für Situationen einsetzbar gemacht werden, bei denen ein Eisansatz auftreten kann.

Erfindungsgemäß wird zudem ein Überspannungsableiter, insbesondere eine Funkenstrecke vorgeschlagen, die dazu vorbereitet sind, eine Kopplung zwischen einem elektrischen Blitzableitungssystem eines Rotorblattes und einer Heizvorrichtung zum Beheizen des Rotorblattes herzustellen. Der Überspannungsableiter, bzw. die Funkenstrecke sind dazu vorbereitet, die Kopplung so herzustellen, dass eine galvanische Trennung vorliegt, solange kein Blitz in das Rotorblatt einschlägt und dass der Überspannungsableiter bzw. die Funkenstrecke vom Strom passiert bzw. übersprungen wird, also ein elektrischer Überschlag erreicht wird, wenn durch einen Blitzschlag in das Rotorblatt, nämlich insbesondere in das Blitzableitungssystem, eine elektrische Spannung in der Heizvorrichtung induziert wird. Die Funkenstrecke verhindert also im Normalbetrieb eine galvanische Verbindung. Für den Fall des Blitzschlages ist der Überspannungsableiter bzw. die Funkenstrecke so dimensioniert, dass die sich dabei einstellende Spannung zu einem Überschlag führen kann. der Überspannungsableiter bzw. die Funkenstrecke sind also so dimensioniert, dass der normale Heizbetrieb, bei dem die Heizvorrichtung mit elektrischem Strom zum Heizen beaufschlagt wird, nicht zu einem Funkenüberschlag an der Funkenstrecke führt. Gleichzeitig muss die Funkenstrecke oder anderer Überspannungsableiter aber so dimensioniert sein, insbesondere einen so geringen Abstand aufweisen, dass im Falle der durch Blitzschlag induzierten Spannung ein Überschlag stattfinden kann, bevor eine solche Spannung eine die Heizvorrichtung gefährdende Spannungshöhe erreicht.

Vorzugsweise ist der Überspannungsableiter gekapselt ausgeführt, insbesondere als Modul, so dass im Falle eines Blitzschlags und resultierendem Spannungsüberschlag in dem Spannungsableiter eine Brand- oder Explosionsgefahr für den Überspannungsableiter umgebende Elemente vermieden wird und der Spannungsableiter von außen aus dem Rotorblatt (1) entnommen und/oder in das Rotorblatt (1) eingesetzt werden kann. Im Falle eines Blitzschlags können an dem Überspannungsableiter kurzzeitig hohe Spannungen und/oder hohe Ströme auftreten, deren Einfluss auf umgebende Elemente, insbesondere die Rotorblattschale oder andere Elemente des Rotorblattes zerstörerisch sein kann und durch die vorgeschlagene Einkapselung vermieden, zumindest begrenzt wird. Beispielsweise können hier durch Explosionen im Rotorblatt vermieden werden, die durch einen solchen Spannungsüberschlag ansonsten entstehen können.

Gemäß einer Ausführungsform ist der Überspannungsableiter als Funkenstrecke ausgebildet, die einen Rezeptor und einen Funkendorn aufweist. Der Rezeptor wird mit dem Blitzableitungssystem verbunden und stellt dazu eine galvanische Verbindung her. In den Rezeptor kann insoweit auch ein Blitz einschlagen, der dann dadurch das Blitzableitungssystem erreicht. Der Funkendorn ist mit der Heizvorrichtung verbunden und gegen den Rezeptor im Grunde isoliert. Es wird ein Funkenabstand zwischen dem Rezeptor und dem Funkendorn festgelegt, der so gewählt wird, dass er eine Überschlagsspannung festlegt, nämlich diejenige Spannung, bei der ein Funke zwischen dem Funkendorn und dem Rezeptor überschlägt. Somit kann diese Überschlagsspannung durch den Abstand zwischen Funkendorn und Rezeptor, nämlich den Funkenabstand, festgelegt werden. Vorzugsweise ist der Funkenabstand einstellbar. Hierdurch können zum Einen Justierungen bei der Installation vorgenommen werden, zum Anderen kann auch eine Anpassung vorgenommen werden, wenn sich der Abstand bspw. durch Ablagerungen verändert hat. Eins solcher Abstand zwischen Funkendorn und Rezeptor kann auch anderweitig festgesetzt werden und es braucht dazu auch kein Dorn verwendet zu werden, sondern es kann auch eine andere Form, z.B. eine Kugeloberfläche gewählt werden.

Vorzugsweise sind der Rezeptor und der Funkendorn oder wenigstens einen Isolator fest miteinander verbunden. Insoweit können Funkendorn und Rezeptor zusammen mit dem Isolator und ggf. weiteren Elementen eine feste Einheit bilden. Sie sind vorzugsweise als Modul ausgebildet, so dass sie, also dieses Modul, von außen aus dem Rotorblatt entnommen oder in das Rotorblatt eingesetzt werden kann. Insbesondere im Falle eines Blitzschlags, und darauf basierend einem Funkenüberschlag zwischen Funkendorn und Rezeptor, kann dieser Einfluss auf die Überschlagsspannung haben. Ggf. muss der Abstand zwischen Rezeptor und Funkendorn eingestellt werden, eine Reinigung vorgenommen werden und/oder etwas an dieser Funkenstrecke repariert werden. Zu diesem Zweck kann ein solches Modul entnehmbar sein, um es zu reparieren, oder ein Ersatzmodul einzusetzen.

Gemäß einer Ausführungsform, die nicht Teil der Erfindung ist, wird auch ein Verfahren zum Auslegen einer Heizvorrichtung vorgeschlagen, wobei
- die Heizvorrichtung elektrisch leitfähige Heizstränge aufweist und
- die Heizstränge sinusförmig, wellenförmig und/oder zickzackförmig verlaufen, mit
- einer Amplitude, die eine Sinusamplitude, Wellenhöhe bzw. Zackenhöhe definiert, und
- einer Wellenlänge, die eine Periodenlänge, eine Wellenlänge bzw. einen Zackenabstand definiert, wobei
- die Amplitude und/oder die Wellenlänge entlang der Heizstränge variiert, um dadurch abschnittsweise eine spezifische Flächenheizleistung der Heizvorrichtung zu variieren, wobei
die Heizvorrichtung in mehrere Heizabschnitt unterteilt ist und abschnittsweise die Amplitude, die Wellenlänge und ein Abstand zwischen den Heizsträngen so ausgewählt wird, dass bei vorgegebenem elektrischem Heizstrom eine für den betreffenden Heizabschnitt vorgesehene spezifische Flächenheizleistung erreicht wird.

Somit erfolgt eine Auslegung einer Heizvorrichtung für ein Rotorblatt so, dass die Amplitude und die Wellenlänge sowie die Abstände zwischen benachbarten Heizsträngen gezielt genutzt werden, um die gewünschte bzw. als notwendig festgestellte spezifische Flächenheizleistung einzustellen. Durch diese drei Parameter können somit weitere Einflussgrößen berücksichtigt werden, wie beispielsweise die jeweils vorhandene Baugröße, die bereits durch enger liegende Heizstränge, also einen geringen Abstand, berücksichtigt werden kann.

Erfindungsgemäß wird zudem eine Heizvorrichtung nach Anspruch 12 vorgeschlagen.

Erfindungsgemäß wird zudem ein Verfahren zum Beheizen eines Rotorblatts vorgeschlagen. Dieses Verfahren setzt vorzugsweise eine solche Heizvorrichtung ein und wird auf ein Rotorblatt gemäß wenigstens einer der oben beschriebenen Ausführungsformen angewendet. Hierbei wird die Heizvorrichtung mit einem Strom beaufschlagt, so dass die Heizvorrichtung und damit zumindest ein Teil des Rotorblattes, in dessen Bereich die Heizvorrichtung angeordnet ist, zu erwärmen. Diese Strombeaufschlagung erfolgt dann, wenn an dem Rotorblatt ein Eisansatz anzunehmen oder zu erwarten so. Zu erwarten ist er besonders bei entsprechenden Wetterlagen, nämlich Temperaturen um den Gefrierpunkt und einer entsprechenden Luftfeuchtigkeit und auch eines Windgeschwindigkeitsbereichs. Außerdem oder stattdessen kann auch ein vorhandener Eisansatz erkannt werden, bspw. optisch oder aufgrund des Verhaltens der Windenergieanlage, um nur einige Beispiele zu nennen.

Weiterhin erfolgt eine Ableitung einer induzierten Spannung im Falle eines Blitzschlages. Wird im Falle eines Blitzschlages in das Blitzableitungssystem des Rotorblattes eine Spannung in der Heizvorrichtung durch diesen Blitzschlag induziert, wird sie über wenigstens eine Funkenstrecke zum Blitzableitungssystem hin und/oder direkt zu einer geerdeten Leitung hin abgeleitet. Im Übrigen arbeitet das vorgeschlagene Verfahren, wie oben im Zusammenhang mit wenigstens einer Ausführungsform eines Rotorblattes erläutert wurde.

Nachfolgend wird die Erfindung anhand von Ausführungsformen beispielhaft unter Bezugnahme auf die begleitenden Figuren näher erläutert.
- Figur 1: zeigt ein Rotorblatt gemäß einer Ausführungsform der Erfindung.
- Figur 2: zeigt eine Ausführungsform einer Funkenstrecke.
- Figur 3a: zeigt einen Abschnitt eines Rotorblattes in einer perspektivischen Darstel-lung gemäß einer Ausführungsform der Erfindung.
- Figur 3b: zeigt ein Rotorblatt gemäß einer Ausführungsform in einer schematischen Schnittdarstellung.
- Figur 4a: zeigt eine Heizvorrichtung und damit ein Kohlefaserheizsystem gemäß einer Ausführungsform der Erfindung.
- Figur 4b: zeigt eine Heizvorrichtung, die in einen ersten und einen zweiten Abschnitt aufgeteilt ist.
- Figur 4c: zeigt schematisch eine Heizvorrichtung gemäß Figur 4b, wobei einzelne Heizgruppen zur Veranschaulichung als getrennte Elemente dargestellt sind.
- Figur 5: zeigt schematisch eine Windenergieanlage in einer perspektivischen Darstellung.

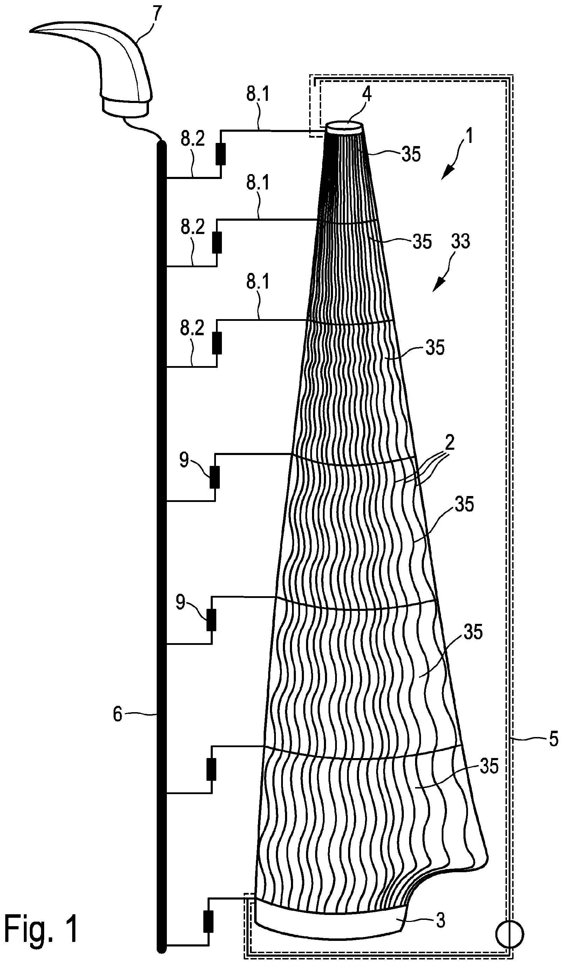

Figur 1 zeigt eine Ausführungsform eines erfindungsgemäßen Rotorblattes 1 schematisch, das entlang seiner Längsachse mit Kohlefasersträngen 2 durchsetzt ist. Diese werden in Form einer Sinusfunktion eingebracht, die parallel zur Blattoberfläche schwingt. Die Amplitude der Sinusfunktion nimmt von der Blattwurzel 3 zur Blattspitze 4 ab. Da der Blattumfang zur Blattspitze hin abnimmt, liegen die Stränge hier dichter zusammen als an der Blattwurzel. Damit steigt der Energieeintrag relativ zur Blattoberfläche. Dies ist vorteilhaft, da die Blattspitze sich im Betrieb mit höherer Bahngeschwindigkeit bewegt als die Blattwurzel, und daher anfälliger ist für Vereisung. Der Stromkreis wird geschlossen über eine hier nur schematisch angedeutete Leitung 5.

Es wird hierbei somit die spezifische Flächenheizleistung zwangsläufig durch das engere Anordnen der Heizstränge, nämlich der Kohlefaserstränge 2 erhöht. Durch eine entsprechende Wahl der Wellenlänge kann dennoch die gewünschte spezifische Flächenheizleistung eingestellt werden.

Es ist auch zu erkennen, dass in Bewegungsrichtung des Rotorblattes, also quer zur Längsrichtung des Rotorblattes 1, die spezifische Flächenheizleistung dadurch beeinflusst werden kann, dass Abstände der Heizstränge 2 verändert werden. Somit lässt sich die spezifische Flächenheizleistung sowohl in Rotorblattlängsrichtung variieren, nämlich durch Wahl der Wellenlänge und der Amplitude, und in Richtung quer zur Rotorblattlängsachse, nämlich in Bewegungsrichtung, durch entsprechende Wahl der Abstände der Heizstränge, insbesondere Kohlefaserstränge.

Die Figur 1 zeigt zudem eine Unterteilung der Heizvorrichtung 33 in Heizgruppen 35, nämlich sechs Heizgruppen 35 in dem gezeigten Beispiel. Jede Heizgruppe 35 weist mehrere Heizstränge 2, nämlich Kohlefaserstränge 2 auf, die in jeder Heizgruppe 35 jeweils zueinander parallel geschaltet sind. Die Heizgruppen 35 sind hingegen zueinander in Reihe geschaltet. Die Blattwurzel 3 und Blattspitze 4 weisen jeweils einen elektrischen Knoten auf, in dem die Heizstränge 2 jeweils elektrisch verbunden sind. Insoweit bilden diese Blattwurzel 3 und die Blattspitze 4 äußere Enden der Heizvorrichtung 33 bzw. einen Anfang und ein Ende.

Da die Kohlefaserstränge 2 stromleitend sind, bilden sie potentielle Blitzeinschlagsstellen. Deshalb ist es sinnvoll, diese an das Blitzableitersystem 6 des Blattes anzuschließen, das hier ebenfalls nur schematisch dargestellt ist. Das Blitzableitersystem 6 wird üblicherweise innerhalb des Blattes von einem metallischen Blattspitzenaufsatz 7 zur Blattwurzel 3 geführt. In regelmäßigen Abständen entlang der Blattlängsachse werden die Kohlefaserstränge über Leitungen 8 mit dem Blitzableitersystem 6 verbunden. Um den Stromkreis im Heizbetrieb nicht kurzzuschließen, wird in den Leitungen 8 eine Funkenstrecke 9 vorgesehen.

Im Falle eines Blitzschlags sollte allerdings vermieden werden, dass der Blitz tatsächlich in die Kohlefaserstränge 2 einschlägt, da dies wohl zu einer Zerstörung der Kohlefaserstränge 2 führen müsste. Gleichwohl kann aber ein Blitzschlag zu einem hohen Strom in dem Blitzableitersystem 6 führen und dadurch eine Spannung in den Kohlefasersträngen 2 und damit jedenfalls in den einzelnen Heizgruppen 35 induzieren. Somit ist jede Heizgruppe 35 über zwei Funkenstrecken 9 an das Blitzableitersystem 6 angeschlossen. Eine solche durch einen Blitzschlag induzierte Spannung wird somit für jede Heizgruppe 35 über die betreffenden Funkenstrecken 9 abgeleitet.

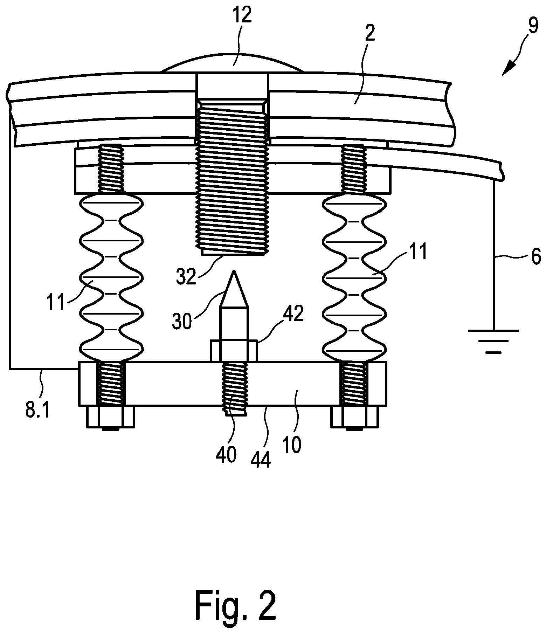

Figur 2 zeigt eine mögliche Ausführungsform der Funkenstrecke. Der Kohlefaserstrang 2, der hier repräsentativ für mehrere parallel geschaltete Kohlefaserstränge 2 steht, wird über Leitung 8.1 galvanisch verbunden mit dem Dornelement 10, das einen Funkendorn 30 aufweist, der in einem vorbestimmten Abstand zu einer Gegenfläche 32 des Blitzrezeptors 12 angeordnet ist bzw. den Abstand im Wesentlichen festlegen kann. Dafür sind ein Einstellgewinde 40 und eine Einstellmutter 42 vorgesehen. Der Funkendorn 30 kann somit für den gewünschten Abstand in der Basis 44 des Dornelements 10 eingeschraubt sein und diese Position kann durch die Einstellmutter 42 fixiert werden.

Das Dornelement 10 wird über die elektrischen Isolatoren 11 beabstandet gegenüber dem Blitzrezeptor 12. Der metallische Blitzrezeptor 12 durchbricht die Oberfläche des Rotorblatts 1 und dient dem Anziehen und der gezielten Aufnahme von Blitzen. Er ist verbunden mit dem geerdeten Blitzableitersystem 6.

Schlägt ein Blitz in das Blitzableitsystem 6 ein und erzeugt dabei eine Spannung an den Kohlefasersträngen 2 bzw. an wenigstens einer Heizgruppe 35, so steigt die Spannung zwischen Dornelement 10 und Blitzrezeptor 12 soweit, dass es zwischen diesen Elementen zu einem Überschlag kommt. Im normalen Heizbetrieb hingegen kommt es nicht zum Überschlag. Der Strom, mit dem die Heizvorrichtung zum Heizen beaufschlagt wird, wird somit im Heizbetrieb nicht abgeleitet.

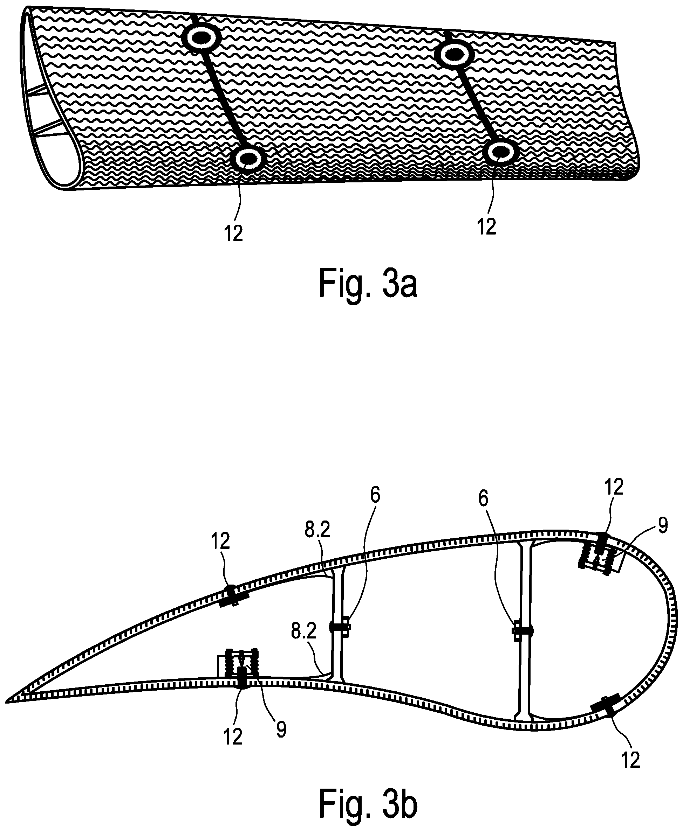

Figur 3a zeigt die Blitzrezeptoren 12 an der Blattoberfläche. Diese Blitzrezeptoren können auch ohne die Einbindung in die Funkenstrecke 9 eingesetzt werden, wie Figur 3b für zwei von vier der Blitzrezeptoren 12 zeigt.

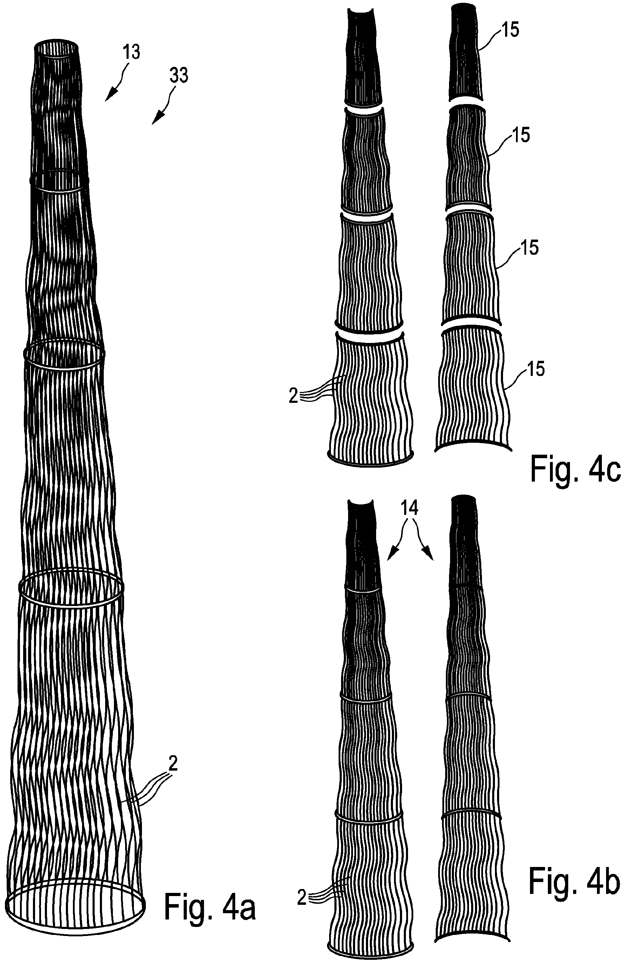

Die Figuren 4a, 4b und 4c veranschaulichen Ausführungsformen einer Heizvorrichtung 33, die auch als Kohlefaserheizsystem 13 bezeichnet werden kann. Es ist vorgesehen, diese Heizvorrichtung 33 bzw. das Kohlefaserheizsystem 13 in eine faserstärkte Kunststoffstruktur eines Rotorblattes einzuarbeiten, wobei die Figuren 4a, 4b und 4c die Heizvorrichtung 33 bzw. das Kohlefaserheizsystem 13 von dem Rotorblatt freigestellt zeigen.

Vorzugsweise werden zur Herstellung eines Rotorblattes und damit auch des Kohlefaserheizsystems 13 bzw. eines Teils davon, zwei Halbschalen gefertigt, die als Halbschalen 14 in Figur 4b angedeutet sind. Auch zu diesen Halbschalen sind nur die Elemente der Heizvorrichtung gezeigt. Diese Halbschalen 14 weisen entsprechende Kohlefaserstränge 2 auf. Sie werden bei der Blattherstellung in die korrespondierenden Blatthalbschalen bzw. die entsprechende Form zum Herstellen der Blatthalbschalen eingelegt und insbesondere mit demselben Harz getränkt, um in die Halbschale eingearbeitet zu sein. Jede der Halbschalen 14 ist in Längsrichtung wiederum zerlegt in Elemente 15, die jeweils eine Heizgruppe bilden. Hierdurch lässt sich u.a. die Herstellung vereinfachen. Darüber hinaus lässt sich dadurch eine Verschaltung realisieren, wie sie in der Figur 1 durch die Leitungen 8.1 und 8.2 und die Funkenstrecken 9 gezeigt ist.

Die Halbschalen 14 können dann zusammengelegt und gemeinsam verschaltet werden, wie dies Figur 4a andeutet, oder sie können auch elektrisch getrennt bzw. in Reihe geschaltet werden, indem bspw. in dem Bereich, der bei der Blattspitze 4 anzuordnen ist, eine Verbindung geschaffen wird und ein Anschluss an eine Versorgungsspannung in dem Bereich hergestellt wird, der zur Anordnung an der Blattwurzel 3 vorgesehen ist.

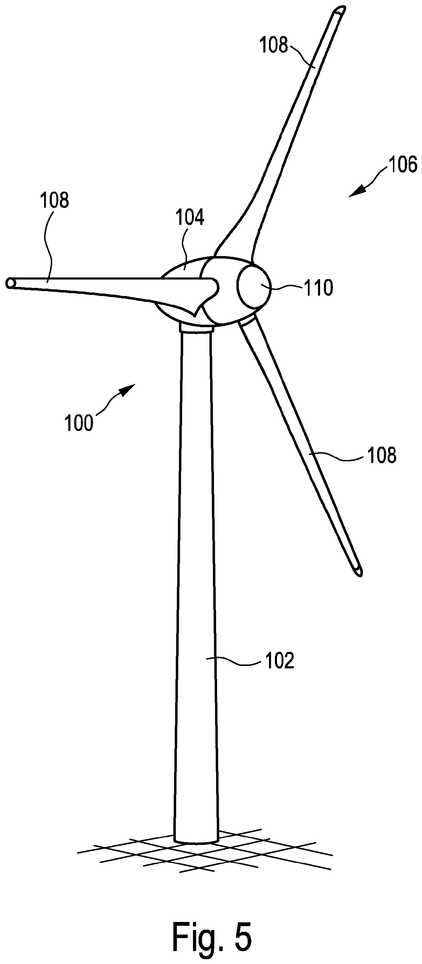

Figur 5 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

## Patentansprüche

1. Rotorblatt (1) einer Windenergieanlage (100) umfassend:
- eine im Rotorblatt (100) im Bereich seiner Rotorblattoberfläche angeordnete Heizvorrichtung (33) zum Beheizen des Rotorblattes (1), wobei
- die Heizvorrichtung (33) elektrisch leitfähige Heizstränge (2) aufweist und
- die Heizstränge (2) sinusförmig, wellenförmig und/oder zickzackförmig verlaufen, mit
- einer Amplitude, die eine Sinusamplitude, Wellenhöhe bzw. Zackenhöhe definiert, und
- einer Wellenlänge, die eine Periodenlänge, eine Wellenlänge bzw. einen Zackenabstand definiert, wobei
- die Amplitude und/oder die Wellenlänge entlang der Heizstränge (2) variiert, um dadurch abschnittsweise eine spezifische Flächenheizleistung der Heizvorrichtung (33) zu variieren,
**dadurch gekennzeichnet, dass**
- die Heizstränge (2) in Heizgruppen (35) aus mehreren parallel geschalteten Heizsträngen (2) aufgeteilt sind und
- zwei oder mehr Heizgruppen (35) zueinander elektrisch in Reihe geschaltet sind.

2. Rotorblatt (1) nach Anspruch 1,
**dadurch gekennzeichnet, dass**
die Amplitude und die Wellenlänge jeweils parallel zur Rotorblattoberfläche gerichtet sind.

3. Rotorblatt (1) nach Anspruch 1 oder 2,
**dadurch gekennzeichnet, dass**
die Heizstränge (2) in Längsrichtung des Rotorblattes (1) verlaufen.

4. Rotorblatt (1) nach einem der vorstehenden Ansprüche,
**dadurch gekennzeichnet, dass**
die Heizstränge (2) als Kohlefasern (2), und/oder als Kohlefaserrovings in das Rotorblatt (1) eingearbeitet sind.

5. Rotorblatt (1) nach einem der vorstehenden Ansprüche,
**dadurch gekennzeichnet,**
**dass** die Heizstränge (2) je Heizgruppe (35) unterschiedliche Amplituden und/oder unterschiedliche Wellenlängen und/oder unterschiedliche Abstände zwischen benachbarten Heizsträngen aufweisen.

6. Rotorblatt (1) nach einem der vorstehenden Ansprüche,
**dadurch gekennzeichnet, dass**
- das Rotorblatt (1) ein elektrisches Blitzableitungssystem (6) zum Ableiten eines Blitzes aufweist und
- die Heizvorrichtung (35) über Überspannungsableiter, insbesondere Funkenstrecken (9) mit dem Blitzableitungssystem (6) so gekoppelt ist, dass
- eine galvanische Trennung vorliegt, solange kein Blitz in das Rotorblatt (1) einschlägt und
- der jeweilige Überspannungsableiter, bzw. die jeweilige Funkenstrecke (9) von elektrischem Strom passiert bzw. übersprungen wird, wenn durch einen Blitzschlag in das Rotorblatt (1) eine elektrische Spannung in der Heizvorrichtung (35) induziert wird.

7. Rotorblatt (1) nach einem der vorstehenden Ansprüche,
**dadurch gekennzeichnet, dass**
am Anfang und am Ende der Heizvorrichtung (35) und zwischen jeder Heizgruppe jeweils ein Überspannungsableiter bzw. eine Funkenstrecke (9) zur Ankopplung der Heizvorrichtung (35) an das Blitzableitungssystem (6) angeordnet ist.

8. Rotorblatt (1) nach einem der vorstehenden Ansprüche,
**dadurch gekennzeichnet, dass**
das Rotorblatt (1) eine Blattwurzel (3) und eine Blattspitze (4) aufweist und die Heizvorrichtung (35)
- mit einem ersten Abschnitt von der Blattwurzel (3) zur Blattspitze (4) verläuft und
- mit einem zweiten Abschnitt zurück von der Blattspitze (4) zur Blattwurzel (3) verläuft, und
- beide Abschnitte elektrisch in Reihe geschaltet und im Bereich der Blattwurzel (3) an eine Stromversorgung zum Bereitstellen eines elektrischen Stroms zum Beheizen der Heizvorrichtung (35) angeschlossen sind.

9. Rotorblatt (1) nach einem der vorstehenden Ansprüche, **gekennzeichnet durch**
einen Überspannungsableiter, insbesondere Funkenstrecke (9) zum Herstellen einer Kopplung zwischen einem elektrischen Blitzableitungssystem (6) des Rotorblattes (1) und der Heizvorrichtung (35), wobei
- der Überspannungsableiter bzw. die Funkenstrecke (9) dazu vorbereitet sind, die Kopplung so herzustellen, dass
- eine galvanische Trennung vorliegt, solange kein Blitz in das Rotorblatt (1) einschlägt und
- der Überspannungsableiter bzw. die Funkenstrecke (9) von elektrischem Strom passiert bzw. übersprungen wird, wenn durch einen Blitzschlag in das Rotorblatt (1) eine elektrische Spannung in der Heizvorrichtung (35) induziert wird.

10. Rotorblatt nach Anspruch 9, **dadurch gekennzeichnet, dass**
- der Überspannungsableiter (9) gekapselt ausgeführt ist, insbesondere als Modul, so dass im Falle eines Blitzschlags und resultierendem Spannungsüberschlag in dem Spannungsableiter eine Brand- oder Explosionsgefahr für den Überspannungsableiter umgebende Elemente vermieden wird und der Spannungsableiter von außen aus dem Rotorblatt (1) entnommen und/oder in das Rotorblatt (1) eingesetzt werden kann, und/oder dass
- der Überspannungsableiter als Funkenstrecke (9) ausgebildet ist, umfassend
- einen Rezeptor (12) zum galvanischen Verbinden mit dem Blitzableitungssystem (6) und
- einen Funkendorn (30) zum galvanischen Verbinden mit der Heizvorrichtung (35), wobei
- ein Funkenabstand zwischen dem Rezeptor (12) und dem Funkendorn (30) eine Überschlagspannung festlegt, bei der ein Funke zwischen dem Funkendorn (30) und dem Rezeptor überschlägt, wobei optional
- der Funkenabstand einstellbar ist.

11. Windenergieanlage (100) umfassend einen Rotor mit wenigstens einem, insbesondere drei Rotorblättern (1) gemäß einem der vorstehenden Ansprüche.

12. Heizvorrichtung (35) eines Rotorblattes (1) einer Windenergieanlage (100) zum Beheizen des Rotorblattes (1), wobei die Heizvorrichtung
- elektrisch leitfähige Heizstränge (2) aufweist und
- die Heizstränge (2) sinusförmig, wellenförmig und/oder zickzackförmig verlaufen, mit
- einer Amplitude, die eine Sinusamplitude, Wellenhöhe bzw. Zackenhöhe definiert, und
- einer Wellenlänge, die eine Periodenlänge, eine Wellenlänge bzw. einen Zackenabstand definiert, wobei
- die Amplitude und/oder die Wellenlänge entlang der Heizstränge (2) variiert, um dadurch abschnittsweise eine spezifische Flächenheizleistung der Heizvorrichtung (33) zu variieren,
**dadurch gekennzeichnet, dass**
- die Heizstränge (2) in Heizgruppen (35) aus mehreren parallel geschalteten Heizsträngen (2) aufgeteilt sind und
- zwei oder mehr Heizgruppen (35) zueinander elektrisch in Reihe geschaltet sind.

13. Heizvorrichtung nach Anspruch 12, **dadurch gekennzeichnet, dass** sie die Heizvorrichtung eines Rotorblattes gemäß einem der Ansprüche 1 bis 10 bildet.

14. Verfahren zum Beheizen eines Rotorblattes (1) mit einer Heizvorrichtung, wobei
- die Heizvorrichtung (33) elektrisch leitfähige Heizstränge (2) aufweist und
- die Heizstränge (2) sinusförmig, wellenförmig und/oder zickzackförmig verlaufen, mit
- einer Amplitude, die eine Sinusamplitude, Wellenhöhe bzw. Zackenhöhe definiert, und
- einer Wellenlänge, die eine Periodenlänge, eine Wellenlänge bzw. einen Zackenabstand definiert, wobei
- die Amplitude und/oder die Wellenlänge entlang der Heizstränge (2) variiert, um dadurch abschnittsweise eine spezifische Flächenheizleistung der Heizvorrichtung (33) zu variieren, und
- die Heizstränge (2) in Heizgruppen (35) aus mehreren parallel geschalteten Heizsträngen (2) aufgeteilt sind und
- zwei oder mehr Heizgruppen (35) zueinander elektrisch in Reihe geschaltet sind, und wobei
die Heizvorrichtung (35) des Rotorblattes (35), mit einem Strom beaufschlagt wird, um sich und damit zumindest einen Teil des Rotorblattes (1) zu erwärmen, wenn an dem Rotorblatt (1) ein Eisansatz, anzunehmen oder zu erwarten ist, wobei im Falle eines Blitzschlages in das Blitzableitungssystem (6) des Rotorblattes (1) eine in der Heizvorrichtung (35) durch diesen Blitzschlag induzierte Spannung über wenigstens einen Spannungsabieiter, insbesondere eine Funkenstrecke (9) zum Blitzableitungssystem (6) hin und/oder zu einer geerdeten Leitung (6) hin abgeleitet wird.

15. Verfahren nach Anspruch 14, **dadurch gekennzeichnet, dass** ein Rotorblatt gemäß einem der Ansprüche 1 bis 10 beheizt wird.

## Claims

1. A rotor blade (1) of a wind power installation (100) comprising:
- a heating device (33) for heating the rotor blade (1), arranged in the rotor blade (100) in the area of its rotor blade surface, wherein
- the heating device (33) has electrically conductive heating wires (2), and
- the heating wires (2) run in a sinusoidal, wave-like and/or zigzag-shaped way, with
- an amplitude, defining a sinusoidal amplitude, wave height or respectively spike height, and
- a wavelength defining a period length, wavelength or respectively a distance between spikes, wherein
- the amplitude and/or wavelength varies along the heating wires (2) in order to be able to vary the specific areal heating performance of the heating device (33) in sections,
**characterized in that**
- the heating wires (2) are divided into heating groups (35) of several heating wires (2) connected in parallel, and
- two or more heating groups (35) are connected with each other in series.

2. A rotor blade (1) according to claim 1,
**characterized in that**
the amplitude and the wavelength respectively are arranged in parallel to the rotor blade surface.

3. A rotor blade (1) according to one of claims 1 or 2,
**characterized in that**
the heating wires (2) run in the longitudinal direction of the rotor blade (1).

4. A rotor blade (1) according to one of the preceding claims,
**characterized in that**
the heating wires (2) are integrated into the rotor blade (1) as carbon fibers (2) and/or carbon fiber rovings.

5. A rotor blade (1) according to one of the preceding claims,
**characterized in**
**that** in each heating group (35), the heating wires (2) have different amplitudes and/or different wavelengths and/or different distances between neighboring heating wires.

6. A rotor blade (1) according to one of the preceding claims,
**characterized in that**
- the rotor blade (1) comprises an electrical lightning protection system (6) for discharging a lightning strike, and
- the heating device (35) is coupled with the lightning protection system (6) via surge protectors, in particular spark gaps (9) in such a way that
- a galvanic isolation exists as long as no lightning strikes the rotor blade (1), and
- the respective surge protector or respectively the respective spark gap (9) is passed or respectively skipped by the electric current, if, through a lightning strike into the rotor blade (1) an electric voltage is induced in the heating device (35).

7. A rotor blade (1) according to one of the preceding claims,
**characterized in that**
a surge protector or respectively a spark gap (9) for coupling the heating device (35) with the lightning protection system (6) is located at the start and at the end of the heating device (35) and between each heating group respectively.

8. A rotor blade (1) according to one of the preceding claims,
**characterized in that**
the rotor blade (1) comprises a blade root (3) and a blade tip (4), and the heating device (35)
- runs in a first section from the blade root (3) to the blade tip (4) and
- runs back from the blade tip (4) to the blade root (3) in a second section, and
- both sections are electrically connected in series and, in the area of the blade root (3), are connected to a power supply for supplying electrical current for heating the heating device (35).

9. Rotor blade according to one of the preceding claims, **characterized by** a surge protector, in particular a spark gap (9), for creating a coupling between an electrical lightning protection system (6) of a rotor blade (1) and the heating device (35), wherein
- the surge protector, or respectively the spark gap (9) is prepared to create the coupling in such way that
- a galvanic isolation exists as long as no lightning strikes the rotor blade (1), and
- the surge protector or respectively the spark gap (9) is passed or respectively skipped by the electric current, if, through a lightning strike into the rotor blade (1) an electric voltage is induced in the heating device (35).

10. Rotor blade according to claim 9, **characterized in that**
- the surge protector (9) is designed in an encapsulated way, in particular as a module, so that in the case of a lightning strike and a resulting voltage sparkover in the surge protector, the danger of a fire or explosion for the elements surrounding the surge protector is prevented and the surge protector can be removed from the rotor blade (1) and/or installed into the rotor blade (1) from the outside, and/or that
- the surge protector designed as a spark gap (9), comprising
- a receptor (12) for establishing a galvanic connection to the lightning protection system (6), and
- a spark pin (30) for establishing a galvanic connection to the heating device (35), wherein
- a spark distance between the receptor (12) and the spark pin (30) determines a sparkover voltage, at which a spark sparks over between the spark pin (30) and the receptor, wherein, optionally,
- the spark distance can be adjusted.

11. A wind power installation (100) comprising a rotor with at least one, in particular three, rotor blades (1) according to one of the preceding claims.

12. Heating device (35) of a rotor blade (1) of a wind turbine (100) for heating the rotor blade (1), wherein the heating device
- has electrically conductive heating wires (2), and
- the heating wires (2) run in a sinusoidal, wave-like and/or zigzag-shaped way, with
- an amplitude, defining a sinusoidal amplitude, wave height or respectively spike height, and
- a wavelength defining a period length, wavelength or respectively a distance between spikes, wherein
- the amplitude and/or wavelength varies along the heating wires (2) in order to be able to vary the specific areal heating performance of the heating device (33) in sections,
**characterized in that**
- the heating wires (2) are divided into heating groups (35) of several heating wires (2) connected in parallel, and
- two or more heating groups (35) are connected with each other in series.

13. Heating device (35) according to claim 12, **characterized in that** it comprises the heating device of a rotor blade according to any one of claims 1 to 10.

14. Method for heating a rotor blade (1) with a heating device, wherein
- the heating device (33) has electrically conductive heating wires (2), and
- the heating wires (2) run in a sinusoidal, wave-like and/or zigzag-shaped way, with
- an amplitude, defining a sinusoidal amplitude, wave height or respectively spike height, and
- a wavelength defining a period length, wavelength or respectively a distance between spikes, wherein
- the amplitude and/or wavelength varies along the heating wires (2) in order to be able to vary the specific areal heating performance of the heating device (33) in sections, and
- the heating wires (2) are divided into heating groups (35) of several heating wires (2) connected in parallel, and
- two or more heating groups (35) are connected with each other in series, and wherein
the heating device (35) of the rotor blade (35), is supplied with current to heat itself and thus at least a part of the rotor blade (1), if the occurrence of icing on the rotor blade (1) is to be assumed or to expected, wherein in the case of a lightning strike into the lightning protection system (6) of the rotor blade (1) a voltage induced by this lightning strike in the heating device (35) is discharged via at least one surge protector, in particular a spark gap (9), in the direction of the lightning protection system (6) and/or in the direction of a grounded wire (6).

15. Method according to claim 14, **characterized in that** a rotor blade according to one of claims 1 to 10 is heated.

## Revendications

1. Pale de rotor (1) d'une éolienne (100) comprenant :
- un dispositif de chauffage (33) disposé dans la pale de rotor (100) dans la zone de sa surface de pale de rotor pour chauffer la pale de rotor (1), dans laquelle
- le dispositif de chauffage (33) présente des faisceaux chauffants (2) électriquement conducteurs et
- les faisceaux chauffants (2) présentent une extension sinusoïdale, ondulée et/ou en zigzag, avec
- une amplitude, qui définit une amplitude de sinusoïde, une hauteur d'onde ou une hauteur de sommet, et
- une longueur d'onde, qui définit une longueur de période, une longueur d'onde ou un écartement de sommets, dans laquelle
- l'amplitude et/ou la longueur d'onde varient le long des faisceaux chauffants (2) pour faire varier ainsi par endroits une puissance de chauffe de surface spécifique du dispositif de chauffage (33),
**caractérisée en ce que**
- les faisceaux chauffants (2) sont répartis en groupes de chauffage (35) composés de plusieurs faisceaux chauffants (2) branchés en parallèle, et
- deux groupes de chauffage (35) ou plus sont branchés les uns par rapport aux autres en série électriquement.

2. Pale de rotor (1) selon la revendication 1, **caractérisée en ce que**
l'amplitude et la longueur d'onde sont dirigées respectivement de manière parallèle par rapport à la surface de pale de rotor.

3. Pale de rotor (1) selon la revendication 1 ou 2, **caractérisée en ce que**
les faisceaux chauffants (2) s'étendent dans le sens longitudinal de la pale de rotor (1).

4. Pale de rotor (1) selon l'une quelconque des revendications précédentes,
**caractérisée en ce que**
les faisceaux chauffants (2) sont pratiqués dans la pale de rotor (1) sous la forme de fibres de carbone (2) et/ou sous la forme de rovings de fibres de carbone.

5. Pale de rotor (1) selon l'une quelconque des revendications précédentes,
**caractérisée en ce**
**que** les faisceaux chauffants (2) présentent selon le groupe de chauffage (35) des amplitudes différentes et/ou des longueurs d'onde différentes et/ou des écartements différents entre des faisceaux chauffants adjacents.

6. Pale de rotor (1) selon l'une quelconque des revendications précédentes,
**caractérisée en ce que**
- la pale de rotor (1) présente un système paratonnerre (6) électrique pour dévier la foudre, et
- le dispositif de chauffage (35) est couplé par l'intermédiaire de parasurtenseurs, en particulier d'éclateurs (9), au système paratonnerre (6) de telle sorte que
- une séparation galvanique est présente tant que la foudre ne frappe pas la pale de rotor (1), et
- le parasurtenseur respectif ou l'éclateur (9) respectif est traversé ou sauté par un courant électrique quand une tension électrique est induite dans le dispositif de chauffage (35) par la foudre qui frappe la pale de rotor (1) .

7. Pale de rotor (1) selon l'une quelconque des revendications précédentes,
**caractérisée en ce que**
respectivement un parasurtenseur ou un éclateur (9) pour accoupler le dispositif de chauffage (35) au système paratonnerre (6) est disposé au début et à la fin du dispositif de chauffage (35) et entre chaque groupe de chauffage.

8. Pale de rotor (1) selon l'une quelconque des revendications précédentes,
**caractérisée en ce que**
la pale de rotor (1) présente une racine de pale (3) et une pointe de pale (4) et le dispositif de chauffage (35)
- s'étend par une première section depuis la racine de pale (3) vers la pointe de pale (4), et
- s'étend par une deuxième section en sens inverse depuis la pointe de pale (4) vers la racine de pale (3), et
- les deux sections sont branchées en série électriquement et sont raccordées, dans la zone de la racine de pale (3), à une alimentation en courant pour fournir un courant électrique pour chauffer le dispositif de chauffage (35) .

9. Pale de rotor (1) selon l'une quelconque des revendications précédentes, **caractérisée par**
un parasurtenseur, en particulier un éclateur (9), pour établir un couplage entre un système paratonnerre (6) électrique de la pale de rotor (1) et le dispositif de chauffage (35), dans laquelle
- le parasurtenseur ou l'éclateur (9) sont préparés pour établir le couplage de telle sorte que
- une séparation galvanique est présente tant que la foudre ne frappe pas la pale de rotor (1) et
- le parasurtenseur ou l'éclateur (9) est traversé ou sauté par un courant électrique quand une tension électrique est induite dans le dispositif de chauffage (35) par la foudre qui frappe la pale de rotor (1).

10. Pale de rotor selon la revendication 9, **caractérisée en ce que**
- le parasurtenseur (9) est réalisé de manière encapsulée en particulier en tant que module si bien que dans le cas de la foudre qui frappe et d'une décharge en résultant dans le limiteur de tension, un risque d'incendie ou d'explosion pour des éléments entourant le parasurtenseur est évité et le limiteur de tension peut être retiré depuis l'extérieur hors de la pale de rotor (1) et/ou peut être inséré dans la pale de rotor (1), et/ou que
- le parasurtenseur est réalisé sous la forme d'un éclateur (9) comprenant
- un récepteur (12) destiné à être raccordé de manière galvanique au système paratonnerre (6) et
- un mandrin d'étincelles (30) destiné à être raccordé de manière galvanique au dispositif de chauffage (35), dans laquelle
- un écartement d'étincelles entre le récepteur (12) et le mandrin d'étincelles (30) fixe une tension d'amorçage à laquelle une étincelle est amorcée entre le mandrin d'étincelles (30) et le récepteur, dans laquelle en option
- l'écartement d'étincelles est réglable.

11. Eolienne (100) comprenant un rotor avec au moins une, en particulier trois pales de rotor (1) selon l'une quelconque des revendications précédentes.

12. Dispositif de chauffage (35) d'une pale de rotor (1) d'une éolienne (100) pour chauffer la pale de rotor (1), dans lequel le dispositif de chauffage
- présente des faisceaux chauffants (2) électriquement conducteurs et
- les faisceaux chauffants (2) présentent une extension de forme sinusoïdale, de forme ondulée et/ou en zigzag, avec
- une amplitude, qui définit une amplitude sinusoïdale, une hauteur d'onde ou une hauteur de sommet, et
- une longueur d'onde, qui définit une longueur de période, une longueur d'onde ou un espacement de sommets, dans lequel
- l'amplitude et/ou la longueur d'onde varient le long des faisceaux chauffants (2) pour faire varier ainsi par endroits une puissance de chauffage de surface spécifique du dispositif de chauffage (33)
**caractérisé en ce que**
- les faisceaux chauffants (2) sont répartis en groupes de chauffage (35) composés de plusieurs faisceaux chauffants (2) branchés en parallèle, et
- deux groupes de chauffage (35) ou plus sont branchés les uns par rapport aux autres en série électriquement.

13. Dispositif de chauffage selon la revendication 12, **caractérisé en ce qu'**il forme le dispositif de chauffage d'une pale de rotor selon l'une quelconque des revendications 1 à 10.

14. Procédé de chauffage d'une pale de rotor (1) avec un dispositif de chauffage, dans lequel
- le dispositif de chauffage (33) présente des faisceaux chauffants (2) électriquement conducteurs, et
- les faisceaux chauffants (2) présentent une extension de forme sinusoïdale, ondulée et/ou en zigzag, avec
- une amplitude, qui définit une amplitude sinusoïdale, une hauteur d'onde ou une hauteur de sommet, et
- une longueur d'onde, qui définit une longueur de période, une longueur d'onde ou un écartement de sommets, dans lequel
- l'amplitude et/ou la longueur d'onde varient le long des faisceaux chauffants (2) pour faire varier ainsi par endroits une puissance de chauffage de surface spécifique du dispositif de chauffage (33), et
- les faisceaux chauffants (2) sont répartis en groupes de chauffage (35) composés e plusieurs faisceaux chauffants (2) branchés en parallèle, et
- deux groupes de chauffage (35) ou plus sont branchés les uns par rapport aux autres en série électriquement, et dans lequel
le dispositif de chauffage (35) de la pale de rotor (35) est soumis à l'action d'un courant pour se réchauffer et ainsi réchauffer au moins une partie de la pale de rotor (1) quand une formation de gel est à supposer ou à attendre sur la pale de rotor (1), dans lequel une tension induite dans le dispositif de chauffage (35) par un coup de foudre est déviée par l'intermédiaire d'au moins un limiteur de tension, en particulier un éclateur (9) vers le système paratonnerre (6) et/ou vers une ligne mise à la terre (6) dans le cas d'un coup de foudre dans le système paratonnerre (6) de la pale de rotor (1).

15. Procédé selon la revendication 14, **caractérisé en ce qu'**une pale de rotor selon l'une quelconque des revendications 1 à 10 est chauffée.
